# EUROPÄISCHE PATENTSCHRIFT

(11) **EP 1 466 160 B1**
(45) Veröffentlichungstag und Bekanntmachung des Hinweises auf die Patenterteilung: **22.12.2010**
(21) Anmeldenummer: 03729440.2
(22) Anmeldetag: 11.01.2003
(51) Int. Cl.: G01N 15/05, G01N 15/10, G01N 21/88, G01N 21/90, G01N 35/00

(54) **VERFAHREN UND VORRICHTUNG ZUR ANALYSE VON KÖRPERFLÜSSIGKEITEN**
METHOD AND DEVICE FOR THE ANALYSIS OF BODY FLUIDS
PROCEDE ET DISPOSITIF D'ANALYSE DE FLUIDES CORPORELS

(30) Priorität: 19.01.2002 DE 10205773; 19.01.2002 DE 10205772; 26.04.2002 DE 10218693; 26.04.2002 DE 10218692
(43) Veröffentlichungstag der Anmeldung: 13.10.2004
(60) Teilanmeldung: 10173380.6
(73) Patentinhaber: PVT Probenverteiltechnik GmbH, 71332 Waiblingen (DE)
(72) Erfinder: ZIEGLER, Michael, 71409 Schwaikheim (DE)
(74) Vertreter: Patentanwälte Ruff, Wilhelm, Beier, Dauster & Partner
(86) Internationale Anmeldenummer: PCT/EP2003/000199
(87) Internationale Veröffentlichungsnummer: WO 2003/060483

(56) Entgegenhaltungen:
- WO-A-99/28724
- US-A- 4 710 874
- US-A- 5 523 560
- US-A- 5 763 265
- US-A- 5 914 272
- PATENT ABSTRACTS OF JAPAN vol. 1997, no. 09, 30. September 1997 (1997-09-30) & JP 09 133687 A (MEIJI DENKI KOGYO KK), 20. Mai 1997 (1997-05-20)
- PATENT ABSTRACTS OF JAPAN vol. 2000, no. 23, 10. Februar 2001 (2001-02-10) & JP 2001 165752 A (HITACHI LTD), 22. Juni 2001 (2001-06-22)
- PATENT ABSTRACTS OF JAPAN vol. 1999, no. 05, 31. Mai 1999 (1999-05-31) & JP 11 037845 A (MATSUSHITA ELECTRIC IND CO LTD), 12. Februar 1999 (1999-02-12)
- PATENT ABSTRACTS OF JAPAN vol. 1999, no. 14, 22. Dezember 1999 (1999-12-22) & JP 11 248853 A (IDS:KK), 17. September 1999 (1999-09-17)
- KARATHANASSI V ET AL: "Application of machine vision techniques in the quality control of pharmaceutical solutions" COMPUTERS IN INDUSTRY, ELSEVIER SCIENCE PUBLISHERS. AMSTERDAM, NL, Bd. 32, Nr. 2, 25. Dezember 1996 (1996-12-25), Seiten 169-179, XP004015634 ISSN: 0166-3615

## Beschreibung

Die Erfindung betrifft ein Verfahren und eine Vorrichtung zur Analyse von Körperflüssigkeiten.

Vor der Analyse von Körperflüssigkeit, wie Blutserum oder Blutplasma, werden zentrifugierte Proben von Körperflüssigkeit daraufhin untersucht, ob sie "gut°, d.h. für die Analyse tauglich sind oder ob sie aufgrund von Verunreinigungen oder bestimmter Krankheitsbilder verfärbt oder getrübt sind. Dies ist bspw. der Fall, wenn sogenannte Clots (Zusammenballungen fester Inhaltsstoffe) in der Blutprobe enthalten sind oder wenn die Blutproben hämolytisch, lipämisch oder ikterisch sind. Die Erkennung erfolgt gegenwärtig in manueller Weise durch visuelle Inaugenscheinnahme der Proben, bevor dieselben weiterverarbeitet werden. Diese Vorgehensweise ist zeitaufwendig und arbeitsintensiv, sie führt zu Fehlern im nachfolgenden Laborbetrieb und hat Ausfallzeiten von Analysegeräten und zeitaufwendige Nacharbeit zur Folge.

JP9133687 offenbart eine Vorrichtung umfassend eine Beleuchtungseinrichtung 8, in einer lichtarmen Gehäuse 9 zur Beleuchtung eines auf einer motorisierten Drehscheibe positionierten und von einem Greifer 7 festgehaltenen Proberöhrchens 10, das eine aus schichtförmigen Serum, Trennmittel und Blutkuchen bestehende zentrifugierte Probe enthält. Ein Glanzdetektor 6 ortet die Position eines Barcode-Etiketts 11 und das Röhrchen wird mittels der motorisierten Drehscheibe derart gedreht, daß eine Kamera 2 einen freien Blick auf die Probenflüssigkeit durch die Spalte zwischen den Enden des Etiketts hat. Bei der Bildaufnahme wird ein Plastikkörper oder Papier aus weiß oder graufarbig Material hinter dem Röhrchen angeordnet, um einen möglichst gleichen Hintergrund bezüglich der Fläche des Röhrchens mit und ohne Etikett darzustellen. Das gesamte System wird von einem Rechner 4 gesteuert, der mit allen Bauteilen verbunden ist. Ein Videogerät erzeugt ein punktförmiges digitales Bild, dessen Punkte linienmäßig gemäß einem Farbraumsystem untersucht werden, um den Übergang zwischen Serum und Blutkuchen bzw. Trennmittel zu lokalisieren.

Der Erfindung liegt die Aufgabe zugrunde, ein Verfahren und eine Vorrichtung für die Analyse von Körperflüssigkeiten bereit zu stellen, mit welchen die Qualität der zu analysierenden Körperflüssigkeit sowie ihre Menge zuverlässig bestimmbar ist.

Die Lösung besteht in einem Verfahren mit den Merkmalen des Anspruchs 1 sowie in einer Vorrichtung mit den Merkmalen des Anspruchs 25. Erfindungsgemäß ist also vorgesehen, dass zur Bestimmung der Qualität und der Menge der Körperflüssigkeit mittels eines Bildaufnahmegeräts ein Bild der zu analysierenden Körperflüssigkeit aufgenommen und mittels einer Bildverarbeitungssoftware ausgewertet wird. Damit ist eine zuverlässige, schnelle und selbsttätige maschinelle Bestimmung der Qualität und Menge der zu analysierenden Körperflüssigkeit möglich. Das erfindungsgemäße Verfahren erlaubt eine wesentliche Automatisierung und Rationalisierung der Analyse von Blutproben und damit eine erhebliche Zeit- und Kostenersparnis.

Es ist von Vorteil, zunächst automatisch Typ und Größe des Behältnisses zu bestimmen. Hierfür kann z. Bsp. mit dem Bildaufnahmegerät ein Bild des Behältnisses hergestellt und mittels einer Auswertesoftware mit gespeicherten Bilddateien bekannter Behältnisse verglichen werden. Falls die Körperflüssigkeit, wie es meistens der Fall sein dürfte, sich in einem Proben- oder Analyseröhrchen befindet, ist es möglich, lediglich Bilder der Kappen dieser Röhrchen herzustellen und mit gespeicherten Bilddateien bekannter Röhrchen zu vergleichen, um Röhrchentyp und Röhrchengröße, bspw. die Röhrchenhöhe zu bestimmen.

Ein Vorteil dieser Bestimmung besteht darin, dass anschließend das Behältnis in eine Position gebracht werden kann, in welcher das Bildaufnahmegerät die in diesem Behältnis befindliche Körperflüssigkeit möglichst vollständig erfassen und ein entsprechend vollständiges Bild herstellen kann. Das Behältnis wird also so bewegt, dass es möglichst vollständig in dem von der Optik des Bildaufnahmegerätes definierten Bildausschnitt positioniert wird. Diese Bewegung ist bei Proben- bzw. Analyseröhrchen in der Regel eine Hubbewegung, da sich derartige Röhrchen vor allem in ihrer Höhe unterscheiden. Sie müssen daher - je nach Röhrchentyp - unterschiedlich weit angehoben werden, damit die Körperflüssigkeit im Bildausschnitt des Bildaufnahmegeräts positioniert werden kann. Diese Bewegung erfolgt in der Regel mittels einer Steuersoftware, welche die in einer Datei gespeicherten Maße des identifizierten Röhrchentyps übernimmt und damit eine Handhabungsvorrichtung für das Behältnis, bspw. einen Hub-Dreh-Greifer, steuert

Das Behältnis kann - je nach den Umständen des Einzelfalls - auch auf andere Weise automatisch so bewegt werden, dass ein möglichst vollständiges Bild der Körperflüssigkeit hergestellt werden kann. Dies ist insbesondere dann der Fall, wenn das Behältnis eine Abdeckung, bspw. ein Etikett oder eine Beschriftung, aufweist, welche den Blick auf die Körperflüssigkeit behindert. Dann sollte das Behältnis so bewegt werden, dass die Abdeckung sich außerhalb des von der Optik des Bildaufnahmegeräts definierten Bildausschnitts befindet. Eine Möglichkeit, dies zu verwirklichen, besteht bspw. darin, dass zur Erfassung der Abdeckung mittels eines Scanners die Ränder der Abdeckung erfasst und das Behältnis durch Drehen des Hub-Drehgreifers automatisch so bewegt wird, dass die Abdeckung auf der von dem Bildaufnahmegerät abgewandten Seite des Behältnisses liegt

Die vom Scanner, vorzugsweise einem Barcode-Scanner, ermittelten Daten triggern also die Bewegung des Behältnisses. Dies wird in der Regel durch eine Steuersoftware realisiert, welche die vom Scanner ermittelten Daten aufnimmt und damit eine Handhabungsvorrichtung, bspw. einen Hub-Dreh-Greifer, steuert.

Insbesondere dann, wenn es sich bei der Abdeckung um ein Etikett, bspw. mit Proben- und/oder Patientendaten, handelt, ist es von Vorteil, nach der soeben beschriebenen Drehung des Behältnisses die Abdeckung optisch auszublenden, indem der gesamte entsprechende Bereich des Behältnisses ausgeblendet wird. Falls ein weißes Etikett ausgeblendet werden soll, ist hierfür bspw. eine weiße Hintergrundfläche besonders geeignet, die bspw. 15 bis 50 %, vorzugsweise 20 bis 25 % der Fläche des Behältnisses abdeckt.

Mittels des Bildaufnahmegeräts kann also mindestens ein Bild der Körperflüssigkeit hergestellt werden, das mittels einer Bildverarbeitungssoftware analysiert wird. Je nach Bedarf werden ein oder mehrere Ausschnittbilder hergestellt, die mittels der Bildverarbeitungssoftware zu einem Gesamtbild zusammengesetzt werden. Um die Durchsatzgeschwindigkeit für eine große Anzahl von Proben zu erhöhen, ist es von Vorteil, wenn mittels des Bildaufnahmegeräts (30) gleichzeitig ein Bild der Körperflüssigkeit in einem ersten Behältnis und ein Bild eines nachfolgenden zweiten Behältnisses zur Bestimmung von Typ und Größe des zweiten Behältnisses hergestellt werden. Dann kann gleichzeitig eine Auswertung des Bildes der Körperflüssigkeit erfolgen und gleichzeitig das nachfolgende Behältnis identifiziert werden, damit es möglichst schnell in eine Position ausgerichtet werden kann, welche die Aufnahme eines möglichst vollständigen Bildes der Körperflüssigkeit ermöglicht.

Zunächst wird vorzugsweise ein Farbbild der Körperflüssigkeit und des Behältnisses hergestellt, da Farbwertunterschiede genauer erfassbar sind als Helligkeitswertunterschiede von Grauwertbildern. Selbstverständlich kann auch ein Grauwertbild hergestellt oder das Farbbild in ein Grauwertbild umgerechnet werden.

Ein bevorzugtes Verfahren zur Erkennung von Typ und Größe des Behältnisses sieht vor, dass mehrere senkrechte Linien in das Bild des Behältnisses gelegt, die Farbwerte bzw. Helligkeitswerte der auf diesen Linien liegenden Bildpunkte erfasst, Farbwert- bzw. Helligkeitswertveränderungen ermittelt und mit Daten bekannter Behältnisse verglichen werden. Auf diese Weise können Typ und Größe des Behältnisses ermittelt werden, wenn die Daten aller bekannten oder zumindest gängigen Behältnisse in einer Datei innerhalb der Bildverarbeitungssoftware gespeichert sind. Anhand der ermittelten Daten für das Behältnis kann dann die Handhabungsvorrichtung gesteuert werden, indem die Daten von der Bildverarbeitungssoftware an die Steuerungssoftware weitergeleitet werden, welche anschließend die Handhabungsvorrichtung so steuert, dass das Behältnis in eine optimalen Position hinsichtlich der Bildaufnahmevorrichtung gebracht wird.

Für den Fall, dass ein Teil einer Abdeckung in den von der Bildverarbeitungsvorrichtung (30) erfassten Bildausschnitt hinein ragt, ist es von Vorteil, wenn ein oder mehrere Ausschnittbilder hergestellt werden, die mittels der Bildverarbeitungssoftware zu einem Gesamtbild zusammengesetzt werden.

Eine vorteilhafte Weiterbildung sieht vor, dass zur Auswertung des Bildes der Körperflüssigkeit mehrere senkrechte und/oder waagrechte Linien in das Bild der Körperflüssigkeit gelegt, die Farbwerte bzw. Helligkeitswerte der auf diesen Linien liegenden Bildpunkte erfasst, Farbwert- bzw. Helligkeitswertveränderungen ermittelt und Hintergrundbereich und/oder Oberkante der Körperflüssigkeit ermittelt werden. Auf diese Weise kann der Hintergrundbereich rechnerisch aus dem Bild entfernt werden, so dass Speicherplatz und Rechenzeit eingespart werden können.

Zur Identifizierung des Trennmittels und/oder des Blutkuchens in einer zentrifugierten Probe von Körperflüssigkeit kann bspw. jede Bildpunktzeile des Bildes von unten nach oben abgetastet wird und der Übergang von dunklen Farb- oder Helligkeitswerten zu helleren Farb- oder Helligkeitswerten detektiert und als Phasengrenze zwischen Blutkuchen und Trennmittel bzw. Trennmittel und Serum definiert werden. Der ermittelte Bildbereich für den Blutkuchen bzw. das Trennmittel kann wiederum rechnerisch aus dem Bild entfernt werden.

Eine andere Möglichkeit zur Identifizierung von Blutserum und/oder Trennmittel und/oder Blutkuchen ist die Anwendung des sog. "region-grow"-Verfahrens. Dabei werden Regionen von Bildpunkten mit ähnlichen Farbwerten ermittelt und die resultierenden Regionen als Serum, Trennmittel und/oder Blutkuchen definiert. Auch in diesem Fall können die Bildbereiche, die dem Trennmittel und dem Blutkuchen entsprechen, rechnerisch aus dem Bild entfernt werden.

Zur Detektion von Feststoffteilchen im Serum ist erfindungsgemäß vorgesehen, dass die dem Serum entsprechende Region mit gespeicherten Farbwerten von Vergleichsproben verglichen und als "klar" oder "nicht klar" klassifiziert werden. Dies ist von Vorteil, da hierzu die gespeicherten Farbwerte verwendet werden können, die bei der Identifizierung des Serumbereichs erhalten werden.
Das erfindungsgemäße Verfahren bietet auch den Vorteil, dass das Volumens des Blutserums einfach bestimmt werden kann. Dazu werden Ober- und Untergrenze des Serumbereichs automatisch ermittelt, und anhand des Durchmessers des Behältnisses wird das Volumen automatisch errechnet.

Zur eigentlichen Farbanalyse des Serums wird vorgeschlagen, für jeden Bildpunkt den Farbwert festzustellen, mit gespeicherten Farbwerten von klassifizierten Vergleichsproben zu vergleichen und als "gut" oder "nicht gut" zu klassifizieren. Vorteilhafterweise wird der Vergleich in einem Farbraum, vorzugsweise in einem "ClE-Lab"-Raum vorgenommen. Zur Vermeidung von Fehlklassifizierung wird das Serum vorzugsweise dann insgesamt als "gut" klassifiziert, wenn die Mehrzahl der Bildpunkte als "gut" klassifiziert wird bzw. insgesamt als "nicht gut" klassifiziert, wenn die Mehrzahl der Bildpunkte als "nicht gut" klassifiziert wird.

Anhand der ermittelten Klassifizierung des Serums kann die Handhabungsvorrichtung wiederum so gesteuert werden, dass "gute" und/oder "klare" Proben zur weiteren Analyse gegeben und "nicht gute" und/oder "nicht klare" Proben aussortiert werden.

Das vorgeschlagene Verfahren benötigt Vergleichsproben zur Auswertung der hergestellten Bilder. Hierzu wird vorgeschlagen, Bilder bekannter Proben herzustellen, in Klassen zu klassifizieren und in Datei/en abzuspeichern. Besonders vorteilhaft ist es, einmal für alle Bilder der einzelnen Klassen Farbmerkmale zu extrahieren.

Da dies beliebig oft wiederholt werden kann, kann auf diese Weise die Klassifizierung ergänzt und aktualisiert, und die einzelnen Vergleichsverfahren können verfeinert werden.

Die erfindungsgemäße Vorrichtung zur Analyse von Körperflüssigkeiten zeichnet sich dadurch aus, dass ein Bildaufnahmegerät vorgesehen und mit einer elektronischen Bildauswertevorrichtung verbunden ist. Hierzu dient vorteilhafterweise mindestens ein Computer, der zur Durchführung des erfindungsgemäßen Verfahrens programmtechnisch eingerichtet ist. Dieser mindestens eine Computer ist bevorzugt in der Vorrichtung integriert. Besonders vorteilhaft ist es, zwei Computer vorzusehen, wobei auf einem Computer die Steuerungssoftware und auf dem anderen Computer die Bildverarbeitungssoftware installiert ist. Diese Software kann selbstverständlich auf einem beliebigen digitalen Speichermedium mit den entsprechenden elektronisch auslesbaren Steuersignalen gespeichert sein, die so mit einem programmierten Computersystem zusammen wirken können, dass das erfindungsgemäße Verfahren ausgeführt wird. Für jede Software kann ein eigenes Speichermedium vorgesehen sein.

Die weiteren Merkmale und Vorteile sind der Beschreibung eines in den folgenden Zeichnungen dargestellten Ausführungsbeispiels der Erfindung sowie den weiteren Unteransprüchen zu entnehmen. Es zeigen:
- Figur 1: das erfindungsgemäße Analysegerät in einer Frontansicht in schematischer, nicht maßstabsgetreuer Darstellung;
- Figur 2: die erfindungsgemäße Anordnung zur Analyse von Körperflüssigkeit in einer Drauf- sicht in schematischer, nicht maßstabsgetreuer Darstellung;
- Figur 3: die Anordnung gemäß Fig. 2 in Blickrichtung R mit einem in Transportposition be- findlichen Behältnis in schematischer, nicht maßstabsgetreuer Darstellung;
- Figur 4: die Anordnung gemäß Fig. 2 in Blickrichtung R mit einem in der Analyseposition be- findlichen Behältnis in schematischer, nicht maßstabsgetreuer Darstellung;
- Figur 5: die Anordnung gemäß Fig. 2 mit einer Beleuchtungseinrichtung in einer Draufsicht in schematischer, nicht maßstabsgetreuer Darstellung;

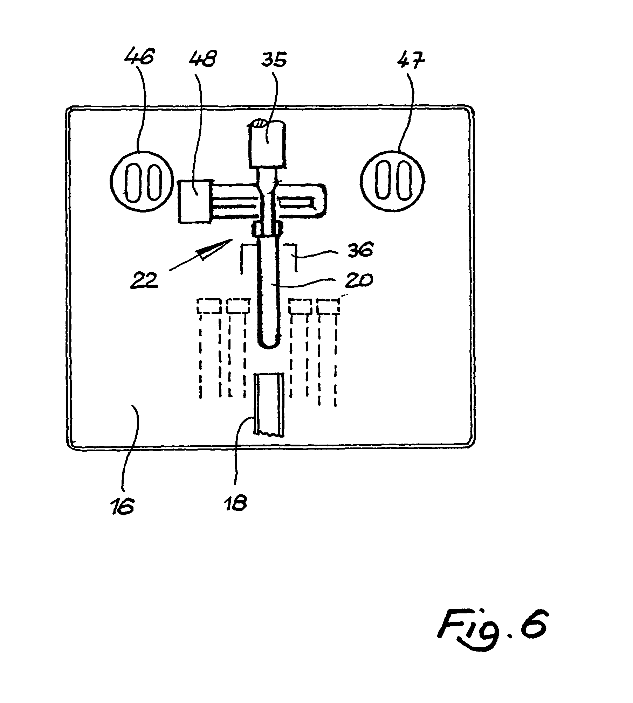

- Figur 6: die Anordnung gemäß Fig. 5 in Blickrichtung S in schematischer, nicht maßstabsge- treuer Darstellung;
- Figur 7: ein mit der erfindungsgemäßen Anordnung verwendetes Behältnis und
- Figur 8: eine Detaildarstellung einer Reflexplatte in Draufsicht in einer schematischen, nicht maßstabsgerechten Darstellung;
- Figur 9: eine beispielhafte Darstellung der Auswertung des Bildes einer Kappe eines Proben- röhrchens;
- Figur 10: eine beispielhafte Darstellung der Auswertung des Bildes eines Behältnisses.

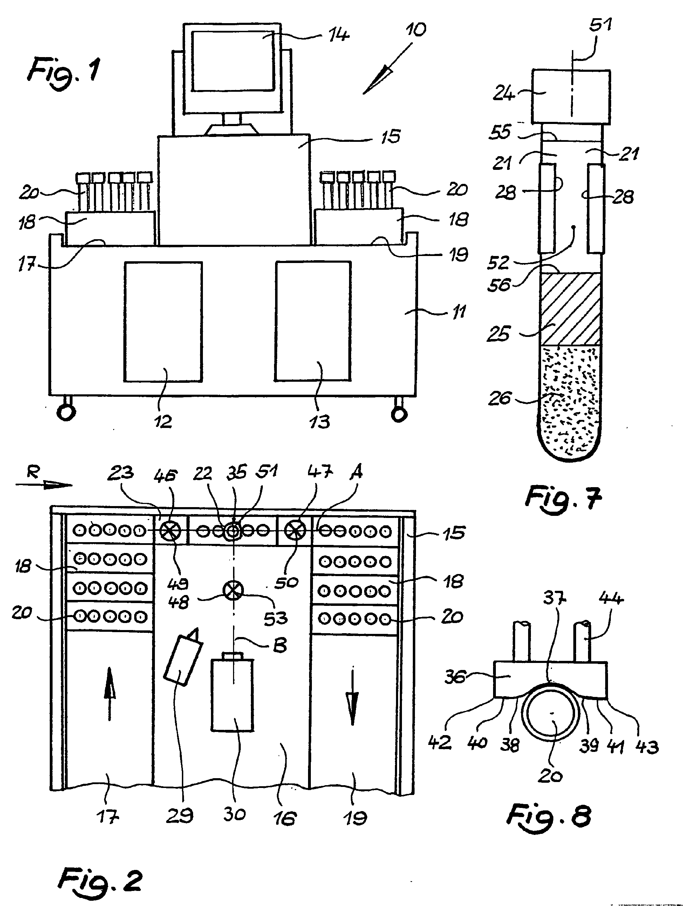

In der Fig. 1 ist ein Gerät 10 zur Analyse von Körperflüssigkeit in seiner Gesamtheit dargestellt Das Gerät 10 umfasst im wesentlichen einen Schrank 11 zur Aufnahme eines mit einer Steuerungssoftware betriebenen Steuerungsrechners 12 und eines mit einer Bildbearbeitungssoftware betriebenen Bildbearbeitungsrechners 13. Die von den Rechnern 12 und 13 ermittelten Daten werden auf einen Computerbildschirm 14 angezeigt. Auf dem Schrank 11 ist ein Gehäuse 15 angeordnet, das einen lichtreflexarmen Raum 16 umgibt.

Auf einer Seite des Gehäuses 15 ist eine Transportbahn 17 zur Zuführung von in Racks 18 befindlichen Körperflüssigkeit 21 enthaltenden Behältnissen 20 in das Gehäuse 15 vorgesehen. Auf der der Transportbahn 17 gegenüberliegenden Seite des Gehäuses 15 ist eine Transportbahn 19 zum Abtransport von Behältnissen 20 mit analysierter Körperflüssigkeit 21 vorgesehen. Bei der zu analysierenden Körperflüssigkeit 21 kann es sich um Blutserum, Blutplasma oder dergleichen handeln.

Die Fig. 2 zeigt eine Draufsicht auf das offene Gehäuse 15. Die Transportbahnen 17 und 19 sind durch eine quer verlaufende Transportbahn 23 miteinander verbunden. Auf der Transportbahn 23 werden die in den Racks 18 befindlichen Behältnisse 20 nacheinander in eine Analyseposition 22 gebracht.

Der Analyseposition werden Behältnisse 20 mit zentrifugierter Körperflüssigkeit 21 zugeführt, so dass sich, wie in Fig. 7 dargestellt, im oberen Bereich des Behältnisses 20 die Körperflüssigkeit 21, beispielsweise Blutserum, im mittleren Bereich ein Trennmittel 25 und im unteren Bereich ein Blutkuchen 26 befindet Das Behältnis 20 ist, mit einer Kappe 24 verschlossen. Im Bereich der Körperflüssigkeit 21 ist ein Etikett 27 aufgeklebt, dessen sich gegenüberliegende Endkanten 28 einen Abstand von mindestens 6,5 Millimeter voneinander aufweisen, der ein Fenster 52 für eine freie Sicht auf die Körperflüssigkeit 21 zulässt.

Der lichtreflexarme Raum 16 ist beispielsweise mit mattschwarze Oberflächen aufweisende Innenwände ausgestattet. In dem lichtreflexfreien Raum 16 sind ein Bildaufnahmegerät 30 und ein Scanner 29 untergebracht, wobei das Bildaufnahmegerät 30 auf das die Körperflüssigkeit 21 enthaltende Behältnis 20 ausgerichtet und fokussiert ist, während der Scanner 29 auf das Etikett 27 ausgerichtet und fokussiert ist.

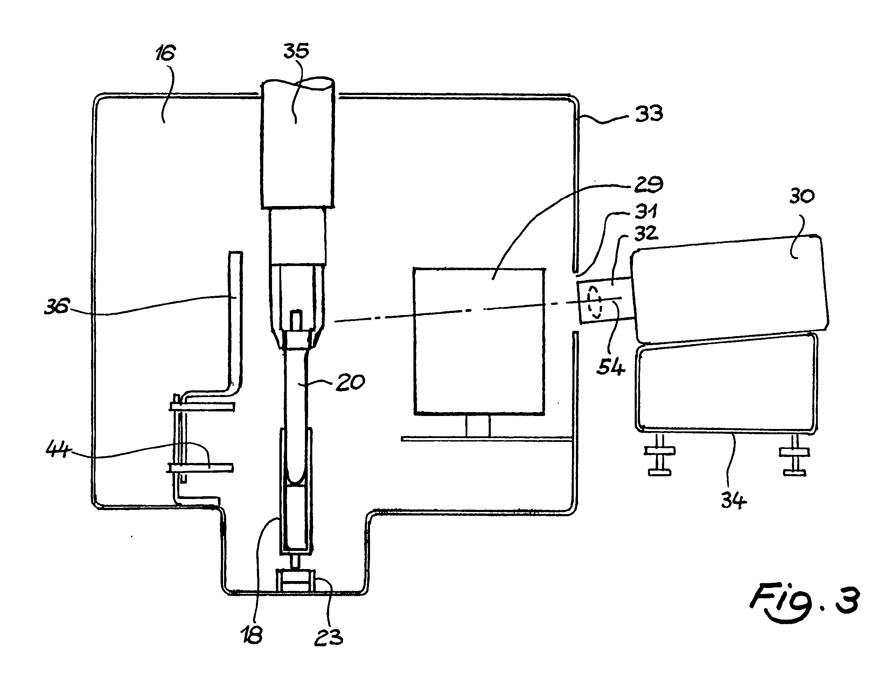

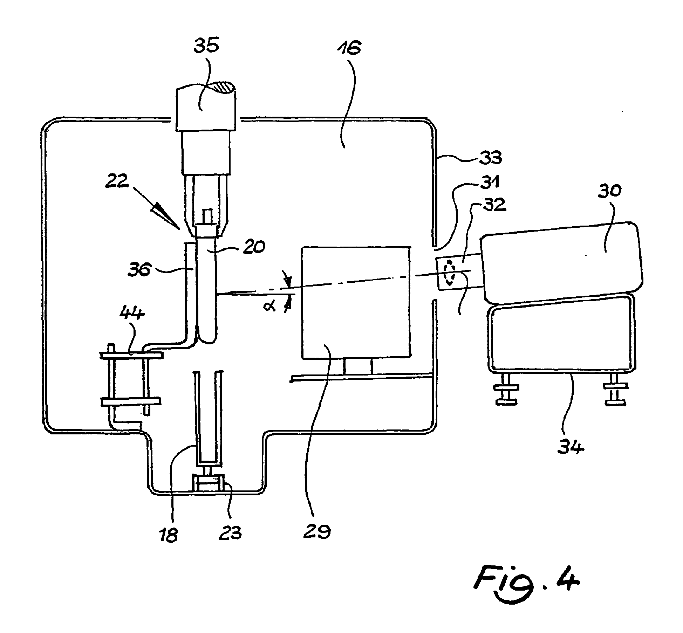

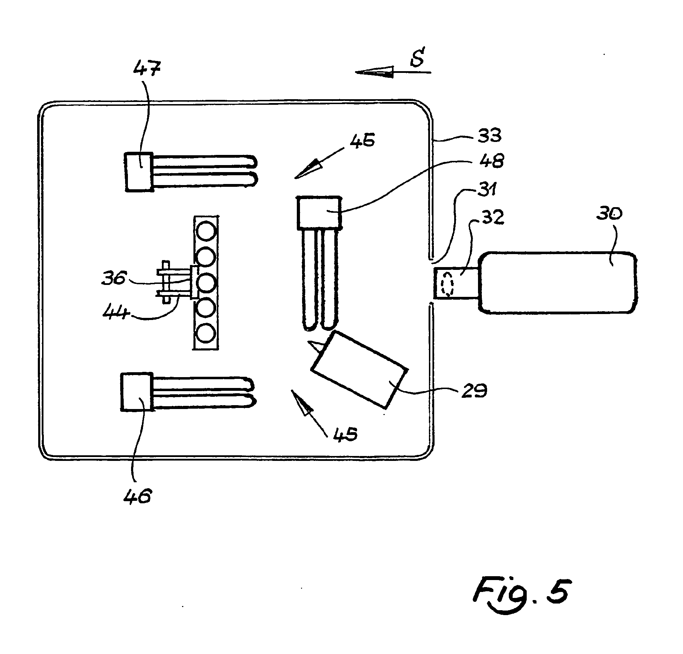

Das Bildaufnahmegerät 30 kann auch außerhalb des Raums 16 angeordnet sein, dann ist jedoch eine lichtdichte Öffnung 31 für den Durchtritt des Objektivs 32 des Bildaufnahmegeräts 30 in einer Wand 33 des Raums 16 ausgebildet (wie die Fig. 3, 4 und 5 zeigen). Das Bildaufnahmegerät 30 kann eine Stehbildkamera, eine Farbbildkamera, eine Videokamera, eine Spektralkamera oder dergleichen sein. Bevorzugt ist eine Farbbildkamera, bspw. eine 3-Chip CCD-Videokamera. Die Einstellungen der Farbkamera wie Scharfstellung, Weißabgleich, Blendeneinstellung, Aufhellung können, je nach Geometrie der erfindungsgemäßen Anordnung, fest voreingestellt sein. Sie können aber auch anhand der Bildauswertungssoftware nachjustiert werden, wenn die von der Bildauswertesoftware zur Steuerungssoftware gemeldeten Daten (siehe dazu weiter unten) in Bezug auf die im Rechner 13 gespeicherten Vergleichsdaten von verminderter Qualität sind.

Die Verknüpfung zwischen dem Bildaufnahmegerät 30, bspw. einer solchen 3-Chip CCD-Videokamera, und dem Bildauswerterechner 13 bedingt eine Umwandlung des von dem Bildaufnahmegerät 30 erstellten Farbsignals in Form eines analogen Spannungssignals in eine digitale Darstellung, die von dem Rechner 13 verarbeitet werden kann. Dies kann bspw. über einen an sich bekannten sog. "Framegrabber" erfolgen. Diese Einrichtungen können auch in das Bildaufnahmegerät 30 integriert sein, so dass dieses direkt über ein Kabel oder ein Bussystem (bspw. "Firewire) an den Rechner 13 angeschlossen werden kann.

Das Bildaufnahmegerät 30 ist auf einem verstellbaren Gestell 34 befestigt, und es ist mit seiner optischen Achse 54 in seiner vertikalen Ausrichtung gegenüber dem senkrecht angeordneten Behältnis 20 um einen variablen spitzen Winkel α von vorzugsweise 5 Winkelgraden geneigt. Mit dieser Maßnahme kann eine vergleichsweise reflexfreie Aufnahme von dem zylinderförmigen Behältnis 20 bzw. der darin befindlichen Körperflüssigkeit 21 gemacht werden. Dabei verläuft die optische Achse 54 des Bildaufnahmegeräts 30 in einer vertikalen Ebene, die senkrecht zur Linie A liegt, wobei die Linie B in dieser vertikalen Ebene liegt.

Oberhalb und mittig zur Analyseposition 22 ist ein Hub-Dreh-Greifer 35 angeordnet, dessen Antrieb durch den Steuerungsrechner 12 gesteuert wird. Der Hub-Dreh-Greifer 35 erfasst ein im Rack 18 befindliches Behältnis 20 und hebt es in die Analyseposition 22 und senkt es nach erfolgter Aufnahme durch das Bildaufnahmegerät 30 wieder in das Rack 18 ab.

Eine im Ausführungsbeispiel horizontal hin und her bewegbare Reflexplatte (sie kann auch vertikal bewegt werden) 36 liegt während einer Aufnahme durch das Bildaufnahmegerät an der demselben abgewandten Seite an, um bei der Aufnahme die auf dem Etikett gedruckten Zeichen, wie beispielsweise einen Barcode, auszublenden. Von dem Absenken eines analysierten Behältnisses 20 durch den Hub-Dreh-Greifer 35 bewegt sich die Reflexplatte 36 auf Führungsbolzen 44 weg vom Behältnis 20, um Platz für den Hub-Dreh-Greifer 35 zu machen.

In der Fig. 8 ist in einer Draufsicht die Reflexplatte 36 dargestellt. Sie ist mit einer dem Behältnis 20 zugekehrten weißen, vorzugsweise schmutzabweisenden Oberfläche versehen, in der eine der Außenform des Behältnisses 20 angepasste konkave Einsenkung 37 eingearbeitet ist.

Diese Einsenkung 37 geht zu beiden Seiten über Abrundungen 38 und 39 in ebene Flächen 40 und 41 über. Die ebenen Flächen enden in vertikal angeordneten scharfen Kanten 42 und 43, die als Messkanten dienen. Mit der Reflexplatte 36 werden etwa 15 bis 50 %, vorzugsweise 20 bis 25 % der Fläche des Behältnisses 20 abgedeckt, so dass Etiketten verschiedener Größen zuverlässig ausgeblendet werden.

In dem lichtreflexfreien Raum 16 ist schließlich eine Beleuchtungseinrichtung 45 vorgesehen, die während des Analysevorgangs eines mit Körperflüssigkeit gefüllten Behältnisses 20 dasselbe und die darin befindliche Körperflüssigkeit 21 möglichst reflexfrei ausleuchtet.

Eine umfangreiche empirische Ermittlung hat ergeben, dass die nachfolgend beschriebene Anordnung von Lampen eine vergleichsweise reflexfreie Ausleuchtung ergibt.

Die Beleuchtungseinrichtung 45 ist oberhalb eines in der Analyseposition 22 befindlichen Behältnisses 20 angeordnet und umfasst drei Lampen 46, 47 und 48. Dabei sind zu beiden Seiten des in der Analyseposition 22 befindlichen Behältnisses 20 jeweils eine seitliche Lampe 46 und 47 angeordnet, derart, dass die Mittelpunkte 49 und 50 beider Lampen 46 bzw. 47 und der Mittelpunkt 51 des Behältnisses 20 auf einer geraden Linie A liegen und dass eine weitere mittlere Lampe 48 vorgesehen ist, derart, dass die Mittelpunkte 53 und 51 dieser mittleren Lampe 48 und des Behältnisses 20 ebenfalls auf einer geraden Linie B liegen, die senkrecht zur Linie A verläuft.

Hinzu kommt, dass die drei Lampen 46, 47 und 48 von dem in der Analyseposition befindlichen Behältnis 22 den gleichen horizontalen Abstand aufweisen, der beispielsweise beim Ausführungsbeispiel sechzig Millimeter beträgt. Ferner ist die vertikale Höhe der zu beiden Seiten des in der Analyseposition 22 befindlichen Behältnisses 20 angeordneten seitlichen Lampen 46 und 47 größer bemessen als die vertikale Höhe der mittleren Lampe 48. Beim Ausführungsbeispiel beträgt dieser Unterschied sechzehn Millimeter.

Die Wirkungsweise der erfindungsgemäßen Anordnung ist folgende:
Hat ein mit Behältnissen 20 gefülltes Rack 18 mit dem ersten Behältnis 20 die Analyseposition erreicht, wird mittels des Bildaufnahmegeräts 30 die Form der das Behältnis 20 verschließende Kappe 24 und damit der Hersteller, der Typ und die Geometrie des Behältnisses 20 festgestellt.

Dann hebt der Hub-Dreh-Greifer 35 das Behältnis 20 aufgrund der ermittelten Maße in die geeignete Analyseposition 22, dreht aufgrund der vom Scanner 29 ermittelten Endkanten 28 des Etiketts 27 das Behältnis in eine aufnahmebereite Lage in der das Fenster 52 dem Bildaufnahmegerät 30 zugekehrt ist. Während mittels des Bildaufnahmegeräts 30 eine oder mehrere Aufnahmen von der Körperflüssigkeit 21 gemacht werden, wird gleichzeitig die Form der Kappe 24 des nachfolgenden Behältnisses erfasst. Das Behältnis 20 mit der analysierten Körperflüssigkeit 21 wird wieder in das Rack 18 abgesenkt, das Rack 18 wird bis zum nachfolgenden Behältnis 20 befördert und dasselbe dann von Hub-Dreh-Greifer 35 an der Kappe 24 erfasst und die Analyseposition 22 bewegt und aufnahmebereit ausgerichtet

Die eigentliche Bildauswertung erfolgt folgendermaßen:
Das erfindungsgemäße Verfahren kann mit einer Steuersoftware und einer Bildverarbeitungssoftware durchgeführt werden. Beide Softwarepakete sind im Ausführungsbeispiel auf verschiedenen Rechnern (12,13) installiert. Die Steuersoftware dient dazu, das Behältnis 20 in eine im Verhältnis zum Bildaufnahmegerät günstige Position zu bringen, also konkret, zur Steuerung der Bewegung der Handhabungsvorrichtung. Die Bildverarbeitungssoftware ist im Ausführungsbeispiel der Steuerungssoftware hierarchisch untergeordnet (sog. "slave").

Zur Identifizierung des Behältnisses 20 erhält die Bildverarbeitungssoftware von der Steuerungssoftware zunächst den Befehl, ein Bild des Behältnisses bzw. der Kappe des Röhrchens, aufzunehmen, auszuwerten und die resultierenden Daten an die Steuerungssoftware zurück zu melden. Das Bildaufnahmegerät 30, im Ausführungsbeispiel eine Farbbildkamera, erstellt ein Bild der Kappe. Dieses Farbbild kann direkt weiter verarbeitet oder in ein Grauwertbild umgerechnet werden.

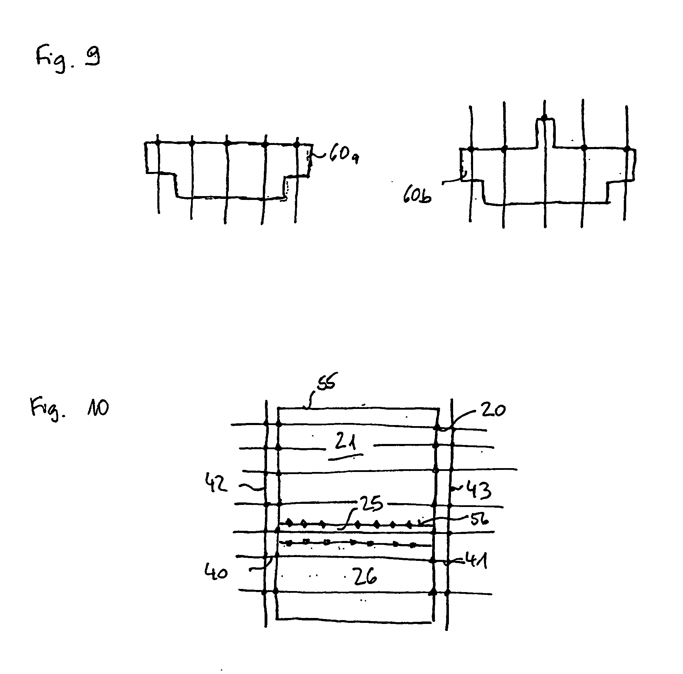

Zur Weiterverarbeitung des Bildes werden die Farbwerte (im Falle eines Farbbildes) oder die Helligkeitswerte (im Falle eines Grauwertbildes) von senkrecht untereinander liegenden Bildpunkten ausgewertet. Dies ist schematisch in Figur 9 anhand der Abbildung zweier gängiger Kappentypen 60a und 60b dargestellt. In jede Kappe 60a, 60b werden mehrere, im Ausführungsbeispiel fünf senkrechte Linien gelegt, entlang derer die Farb- bzw. Helligkeitswerte der auf ihnen liegenden Bildpunkte ermittelt werden. Dabei wird auch die Farbwert- bzw. Helligkeitsänderung an der Oberkante der Kappen am Übergang vom Hintergrundbild zur Kappenoberkante ermittelt. Die entsprechenden Bildpunkte sind in Figur 9 dick hervorgehoben. Auf diese Weise wird eine Kontur der Kappenoberkante ermittelt, die für verschiedene Hersteller charakteristisch ist. Die ermittelten Farbwert- bzw. Helligkeitswertdaten werden mit Daten bekannter Kappen verglichen, die in einer Datei im Rechner abgelegt sind. Stellt die Bildverarbeitungssoftware eine Übereinstimmung fest, dann übernimmt die Bildverarbeitungssoftware die gespeicherten Daten des zur identifizierten Kappe gehörenden Röhrchens und sendet diese Daten an die Steuerungssoftware. Diese benutzt die Daten, um die Handhabungsvorrichtung zu steuern und das Röhrchen in eine für dessen Maße geeignete, im Rechner vorgegebene Position zur Bilderfassung zu bringen.

Der nächste Schritt besteht darin, das Behältnis 20 zu drehen, um evtll. vorhandene Etiketten oder sonstige Abdeckungen auf dem Behältnis 20 aus dem vom Bilderfassungsgerät definierten Bildausschnitt heraus zu drehen. Zu diesem Zweck ist im Ausführungsbeispiel ein Scanner, vorzugsweise ein Barcode-Scanner, vorgesehen, der in der Lage ist, einen Barcode auf Etiketten zu detektieren. Wenn der Scannerstrahl über das Behältnis 20 wandert und einen vorhandenen Barcode detektieren kann, dann sendet er ein entsprechendes Signal ("good read") an die Steuerungssoftware, welche die Handhabungsvorrichtung steuert. Das Behältnis wird dann so lange gedreht, bis der Scanner keinen Barcode mehr detektiert und wiederum ein entsprechendes Signal ("no good read") an die Steuerungssoftware sendet. Dann wird das Behältnis so lange weitergedreht, bis sich das Etikett, das über den Barcode-Scanner exakt lokalisiert wurde, nicht mehr im Bereich der Optik des Bildaufnahmegeräts befindet.

Nachdem das Bildaufnahmegerät, im Ausführungsbeispiel eine Farbbildkamera, ein Farbbild der Körperflüssigkeit in dem betreffenden Behältnis hergestellt und als Datensatz abgespeichert hat, erfolgt die eigentliche Analyse der Körperflüssigkeit, wie es in Figur 10 schematisch dargestellt ist:
Figur 10 zeigt in vergrößerter schematischer Darstellung einen Teil der Reflexplatte 36, nämlich die Flächen 40,41 und die scharfen Kanten 42, 43 sowie das Behältnis 20 mit der zentrifugierten Körperflüssigkeit, die in Serum bzw. Plasma 21, Trennmittel 25 und Blutkuchen 26 getrennt ist. Das Farbbild wird entweder direkt weiter verarbeitet oder in ein Grauwertbild umgerechnet. Die Bildverarbeitungssoftware legt nun mehrere, im Ausführungsbeispiel 7 waagrechte Linien in das Bild, entlang derer für die auf den Linien liegenden Bildpunkte die Farbwerte im Fall eines Farbbildes und die Helligkeitswerte im Fall eines Grauwertbildes ermittelt werden. Zunächst wird von außen nach innen ein Übergang von schwarz zu weiß ermittelt, welcher dem Verlauf der Kanten 42, 43 der Reflexplatte 36 entspricht. Damit sind die äußeren Bildränder erkannt, und das eigentliche Bildelement ist fixiert. Damit wird vermieden, dass der Bildhintergrund mit analysiert wird, was eine fehlerhafte Auswertung bewirken und zusätzlich Rechenzeit und Speicherplatz beanspruchen würde. Die entsprechenden Bildpunkte sind mit Kreisen bezeichnet.

In einem zweiten Schritt werden die Farb- bzw. Helligkeitswerte der Bildpunkte auf den Linien weiter von außen nach innen ausgewertet, bis ein Übergang von weiß zu nicht-weiß festgestellt werden kann. Damit wird die Kante des Behältnisses 20 definiert, so dass der weiße, von der Reflexplatte 36 stammende Hintergrund ebenfalls heraus gerechnet werden kann. Damit ist der eigentlich auszuwertende Bildausschnitt definiert. Die entsprechenden Bildpunkte sind mit Dreiecken bezeichnet

Nun muss das eigentlich auszuwertende Blutserum bzw. Plasma 21 identifiziert und rechnerisch vom Trennmittel 25 und vom Blutkuchen 26 getrennt werden. Dazu wird zunächst die Trennlinie 55 zwischen dem Serum 21 und dem Hintergrund festgestellt. Dies geschieht entweder wie beschrieben über die Analyse von Bildpunkten entlang waagrechter oder senkrechter Linien, wie letzteres oben für die Identifizierung der Röhrchenkappe beschrieben wurde. Alternativ kann die Oberkante 21' des Serums 21 auch mittels des an sich bekannten Schwellenwertverfahrens bestimmt werden.

Zur Identifizierung des Blutkuchens, der in der Regel dunkelrot gefärbt ist, wird der mit den soeben beschriebenen Verfahrensschritten identifizierte auszuwertende Bildausschnitt von unten nach oben systematisch durchsucht, wobei jede Bildpunktzeile von unten nach oben abgetastet wird. Dies kann am Farbbild oder - vorzugsweise - am Grauwertbild erfolgen. Mittels des an sich bekannten Schwellenwertverfahrens wird der Übergang vom dunklen Blutkuchen 26 zum helleren Trennmittel 25 festgestellt. Die entsprechende Bildpunktzeile ist mit Vierecken angedeutet. Der Bildausschnitt, der den Blutkuchen 26 umfasst, wird darauf hin rechnerisch entfernt.

Zum Schluss muss die Trennschicht, wenn vorhanden, 25 identifiziert und rechnerisch vom Serum bzw. Plasma 21 getrennt werden. Dazu wird vorzugsweise das Farbbild verwendet, da Serum 21 und Trennschicht 25 erfahrungsgemäß ähnliche Helligkeitswerte aufweisen. Hierzu wird das sog. "region growing"-Verfahren verwendet. Dabei wird jeder Bildpunkt einzeln analysiert und Regionen von Bildpunkten mit ähnlichen Farbwerten ermittelt. In diesem Fall bedeutet "ähnlich" eine von der Software vorgegebene maximale Farbwertdifferenz, die zwei Bildpunkte aufweisen dürfen, um noch zur gleichen Region zu gehören. Im Einzelnen wird für einen ersten Bildpunkt der Farbwert ermittelt, der eine Bildregion definiert. Wenn ein benachbarter Bildpunkt einen ähnlichen Farbwert aufweist, d.h. wenn die Farbwertdifferenz einen vorgegebenen Maximalwert nicht überschreitet, wird er derselben Region zugeschlagen wie der erste Bildpunkt. Wenn ein benachbarter Bildpunkt hingegen einen anderen Farbwert aufweist, also die Farbwertdifferenz den vorgegebenen Maximalwert überschreitet, so definiert dieser benachbarte Bildpunkt eine neue Region von Bildpunkten mit ähnlichen Farbwerten.

Auf diese Weise werden schließlich zwei Regionen ermittelt, nämlich eine Region, die dem Serum 21 entspricht und eine Region, die dem Trennmittel 25 entspricht. Die Phasengrenze zwischen beiden Regionen wird von der Bildverarbeitungssoftware berechnet. Dazu werden Erfahrungswerte programmiert, bspw. dass die Serumregion oberhalb der Trennmittelregion liegt und dass die Serumregion eine größere Fläche einnimmt als die Trennmittelregion. Die Bildverarbeitungssoftware legt also rechnerisch die Trennlinie 56 zwischen Serum 21 und Trennmittel 25 fest Diese errechnete Linie ist mit Rauten markiert.

Nun kann die eigentliche Auswertung des Bildes des Serums 21 beginnen, nachdem alle anderen Bestandteile des vom Bildaufnahmegerät 30 hergestellten Bildes identifiziert und rechnerisch entfernt wurden. Zunächst wird das Volumen des Serums 21 bestimmt Dazu wird mittels der Bildverarbeitungssoftware der Abstand zwischen der Trennlinie 55 und der Trennlinie 56 bestimmt. Anschließend wird unter Berücksichtigung des Durchmessers des Behältnisses 20 mittels der Bildverarbeitungssoftware aufgrund der erhaltenen Daten die Menge der im Behältnis 20 befindlichen Körperflüssigkeit errechnet.

Der Durchmesser des Behältnisses 20 ist bekannt und in einer Datei im Bildverarbeitungsrechner 13 abgespeichert, da bereits wie oben beschrieben der Röhrchentyp identifiziert wurde und die Maße der verschiedenen Röhrchentypen im Bildverarbeitungsrechner abgelegt sind. Selbstverständlich kann die Menge an Serum 21 auch anhand der gemessenen Breite des Behältnisses 20 berechnet werden, allerdings besteht dann die Gefahr, dass evtl. ins Bild ragende Bereiche von Abdeckungen eine geringere Breite vortäuschen und so das Ergebnis verfälschen.

Zur Auswertung des Serumbildes gehört schließlich noch die eigentliche Farbanalyse. Mit der Farbanalyse wird geprüft, ob das Serum 21 "gut" oder "schlecht" ist, d.h. ob die Probe zur weiteren medizinischen Analyse des Serums gegeben oder als nicht medizinisch analysierbar verworfen wird. Wenn das Serum 21 klar, hell und ggf. leicht grünlich gefärbt ist, ist es brauchbar. Serum 21 mit anderen Färbungen oder Eintrübungen wird als unbrauchbar verworfen.

Diese Farbanalyse wird durchgeführt, indem für jeden Bildpunkt des das Serum 21 darstellenden Bildausschnittes der Farbwert festgestellt und mit gespeicherten Farbwerten verglichen wird. Dieser Vergleich findet in mindestens einem sog. "Farbraum" statt. Im Ausführungsbeispiel ist dies der sog. "CIE-Lab"-Raum. Dieser Farbraum ist kugelförmig. Zum Vergleich der Farbwerte werden Farbabstände innerhalb der Farbkugel gemessen. Im Kugelinneren sind Vergleichsdaten von typischen Serumproben verteilt (siehe dazu auch weiter unten unter "teach-in"). Der gemessene Farbwert wird mit den Vergleichswerten verglichen. Dabei kommt es darauf an festzustellen, welchem Vergleichswert der gemessene Wert am nächsten liegt, bzw. zu welchem Vergleichswert der gemessene Wert den kleinsten Abstand hat. Diese Auswertung bezeichnet man als "kleinster-Abstand-Klassifikator" oder als "nächster-Nachbar-Klassifikator". Je mehr Vergleichswerte vorhanden sind, desto zuverlässiger ist das Ergebnis der Auswertung.

Im Ausführungsbeispiel wird jeder Bildpunkt des Bildausschnitts, der das Serum 21 darstellt, erfasst; dies sind etwa 10.000 bis 30.000 Bildpunkte. Dabei können durchaus verschiedene Bildpunkte unterschiedlich klassifiziert bzw. als "gut" oder "nicht gut" bewertet werden. Die endgültige Klassifizierung erfolgt im Ausführungsbeispiel durch ein "Mehrheitsvotum", d.h. wenn die Mehrheit der Bildpunkte als "gut" bewertet wird, wird das Serum 21 insgesamt als brauchbar bewertet, und wenn die Mehrheit der Bildpunkte als "nicht gut" bewertet wird, wird das Serum 21 insgesamt als nicht brauchbar bewertet. Diese Art der Gesamtbewertung mindert das Risiko von Fehlbewertungen und Fehlurteilen.

Wenn die soeben beschriebene Farbauswertung abgeschlossen ist, erfolgt die Rückmeldung des Ergebnisses "Probe brauchbar" oder "Probe nicht brauchbar" an die Steuerungssoftware. Bei der Rückmeldung "Probe nicht brauchbar" stellt die Steuerungssoftware fest, dass die Untersuchung dieser Probe abgeschlossen ist; die Probe wird aussortiert.

Bei der Rückmeldung "Probe brauchbar" schließt sich im Ausführungsbeispiel ein weiterer Auswertungsschritt an, nämlich die Untersuchung auf feste Teilchen, sog. "clots" im Serum 21. Dabei handelt es sich um feste Blutbestandteile wie bspw. Fibrinogen, die nicht in den Blutkuchen 26 abzentrifugiert wurden. Diese Clots würden bei der Weiterverarbeitung der Probe bspw. Injektionsnadeln verstopfen und so die Analysegeräte funktionsuntüchtig machen. Außerdem können sie das Ergebnis der medizinischen Analyse verfälschen. Die Untersuchung auf Clots erfolgt mit einem Farbklassifikator, der gleichartig wie der oben beschriebene Farbklassifikator funktioniert, der aber mit getrennt erstellten Vergleichsdaten arbeitet. Zur Einstellung dieses Klassifikators werden lediglich die Regionen im Serum 21 verwendet, die tatsächlich Clots sind. Zur Verbesserung der Trennschärfen des Verfahrens können auch bestimmte kritische Bereiche als "Nicht-Clot" markiert werden; dies sind z.B.Aufschriften auf dem Proberöhrchen 20. Weiterhin kann in "rote Clots"und "weiße Clots" unterschieden werden. Die Ergebnisse werden wiederum von der Bildverarbeitungssoftware an die Steuerungssoftware gemeldet

Ergibt der Vergleich, dass das Serumbild einem "guten" Vergleichsbild ohne "clots" entspricht, wird die Probe weiter verarbeitet. Ergibt der Vergleich jedoch, dass das Serumbild einem "nicht guten" Vergleichsbild mit "clots" entspricht, beendet die Steuerungssoftware die Untersuchung der betreffenden Probe und sortiert sie aus.

Die soeben beschriebene Auswertung wird einmal komplett durchgeführt, falls der dem Bildaufnahmegerät zugewandte Bildausschnitt des Behältnisses 20 frei von Abdeckungen ist. Anschließend wird mittels der Steuerbefehle der Steuerungssoftware das Behältnis 20 mittels der Handhabungsvorrichtung entweder auf eine Transporteinrichtung zur Weiterverarbeitung oder auf eine Transporteinrichtung zum Aussortieren der Probe gesetzt.

Wenn der Bildausschnitt jedoch bspw. durch eine besonders große Abdeckung, bspw. ein besonders großes Etikett teilweise blockiert ist, wird die Probe so ausgerichtet, dass nur eine Kante der Abdeckung in den Bildausschnitt hineinragt. Dies geschieht, indem die von der Bildverarbeitungssoftware an die Steuerungssoftware übermittelten Daten zur entsprechenden Steuerung der Handhabungsvorrichtung dienen. Nach der oben beschriebenen Auswertung wird das Behältnis 20 von der Handhabungsvorrichtung, gesteuert durch die Steuerungssoftware anhand der von der Bildverarbeitungssoftware übermittelten Daten so gedreht, dass ein anderer, nicht von der Abdeckung überdeckter Bereich des Behältnisses 20 in den Erfassungsbereich des Bildaufnahmegeräts 30 gerät. Dann wird eine weitere Auswertung, wie oben beschrieben, vorgenommen. Dieser Vorgang wird vorzugsweise maximal 5 bis 6 mal wiederholt

Zur Auswertung des von dem Bildaufnahmegerät erstellten Bildes benötigt die Bildverarbeitungssoftware Vergleichsdaten, die in dem Rechner 13 gespeichert sind. Diese Vergleichsdaten können bspw. durch ein sog. "teach-in" erstellt werden. Dabei werden nicht mehr benötigte, bekannte Proben, die vorzugsweise maximal 10 Tage alt sind, aufgenommen und die Daten in Form ganzer Bilder abgelegt. Jedes Bild erhält eine Klassifikation, bspw. "gut", "hämolytisch", "lipämisch" oder "ikterisch". Anhand dieser Klassifikation wird die Farbqualität jeder Probe gespeichert. Die Gesamtheit dieser Daten wird als "klassifizierte Lernstichprobe" bezeichnet. Hierbei kann insbesondere die Klassifizierung "hämolytisch", d.h. stärkere Rotfärbung durch roten Blutfarbstoff, an die Auswertepraxis einzelner Labors angeglichen werden, da eine solche Rotfärbung auch auf einem Verfahrensfehler bei der Blutentnahme beruhen kann.
In diesem Fall ist die Probe trotz der Rotfärbung für die medizinische Analyse brauchbar. Um unnötig hohen Ausschuss zu vermeiden, kann in diesem Fall die Toleranzschwelle für die Beurteilung "nicht brauchbar" auf Kundenwunsch heraufgesetzt werden.

Nach der Zuordnung der Bilder zu den einzelnen Klassen kann der Klassifikator trainiert werden. Dafür extrahiert er für alle Bilder der einzelnen Klassen Farbmerkmale. Dies kann beliebig oft wiederholt werden, d.h. der Klassifikator kann jederzeit aktualisiert werden.

Die Erkennung der Clots ist ebenfalls durch Vergleichsdaten, die in einem "teach-in" erstellt werden, steuerbar. Die von einem Experten als Clots erkannten und markierten Bildausschnitte werden hierzu im Rechner 13 gespeichert und als Vergleichsdaten verwendet. Mit Hilfe dieser Vergleichsdaten kann der Klassifikator für die Clots Erkennung durch Extragktion der Farbmerkmale trainiert werden. Auch dieser Klassifikator kann jederzeit aktualisiert werden.

Die für die beschriebene Auswertung notwendige Software ist im Ausführungsbeispiel unter Microsoft C++ in ANSI C erstellt. Die Software benutzt API-Funktionen von Windows-NT 4.0 mit Service-Pack 6.0. Es werden weder die Microsoft Foundation Classes (MFC) noch C++-spezifische Elemente verwendet. Für die Bildverarbeitung wird die Befehlsbibliothek WiT 7.11 von Logical Vision benutzt Dazu gehört auch eine spezielle C-Datenstruktur, die in den Handbüchern zu WiT erklärt ist. Bibliotheken aus WiT 7.11 werden auch für die Steuerung des Framegrabbers verwendet. Diese Bibliotheken brauchen Unterstützungen von zwei anderen Softwarepaketen, "Sapera 3.10 Runtime Basic and Processing" und den Viper-RGB-Treiber, Version 3.10, um den Framegrabber zu steuern.

Die Anlage 1 bietet eine Übersicht über die Daten- und Verzeichnisstruktur der erfindungsgemäße Software.

## Patentansprüche

1. Verfahren zur Analyse von Körperflüssigkeiten, bei dem
- mittels eines Bildaufnahmegeräts (30) von der in einem Röhrchen (20) befindlichen Körperflüssigkeit (21) mindestens ein Bild hergestellt wird, das mittels einer Bildverarbeitungssoftware analysiert wird,
- mittels des Bildaufnahmegeräts (30) ein Bild des Röhrchens (20) hergestellt wird und das Bild des Röhrchens (20) mittels einer Auswertesoftware mit gespeicherten Bilddateien und/oder Maßen bekannter Röhrchen verglichen wird, wobei
- zunächst automatisch Typ und Größe des Röhrchens (20) bestimmt werden, indem Bilddaten der Kappen der die Körperflüssigkeit aufnehmenden Röhrchen (20) mit Daten bekannter Kappen verglichen und damit Röhrchentyp und Röhrchenhöhe bestimmt werden, wobei
- nach der Bestimmung von Typ und Größe des Röhrchens (20) dieses automatisch derart anhand der ermittelten Daten für das Röhrchen bewegt wird, dass mittels des Bildaufnahmegeräts (30) ein möglichst vollständiges Bild der Körperflüssigkeit hergestellt werden kann, und
- zur Identifizierung von Blutserum/Plasma (21) und/oder Trennmittel (25) und/oder Blutkuchen (26) mittels des "region-grow"-Verfahrens Regionen von Bildpunkten des Bilds der Körperflüssigkeit mit ähnlichen Farbwerten ermittelt und die resultierenden Regionen als Serum (21), Trennmittel (25) und/oder Blutkuchen (26) definiert werden.

2. Verfahren nach Anspruch 1, **dadurch gekennzeichnet, dass** zur Erfassung einer auf dem Röhrchen (20) angebrachten Beschriftung, eines Etiketts und/oder einer Abdeckung (27) ein Scanner bzw. eine Bildauswertesoftware vorgesehen sind, dass der Scanner den Barcode und die Bildauswertesoftware die Ränder der Abdeckung (27) erfasst und das Röhrchen (20) automatisch so bewegt wird, dass die Abdeckung (27) auf der von dem Bildaufnahmegerät (30) abgewandten Seite des Röhrchens (20) liegt.

3. Verfahren nach Anspruch 2, **dadurch gekennzeichnet, dass** anschließend zur optischen Ausblendung einer Abdeckung (27) das Röhrchen (20) auf der von dem Bildaufnahmegerät (30) abgewandten Seite abgedeckt wird.

4. Verfahren nach Anspruch 3, **dadurch gekennzeichnet, dass** 15 bis 50%, vorzugsweise 20 bis 25%, der Außenfläche des Röhrchens abgedeckt werden.

5. Verfahren nach einem der vorhergehenden Ansprüche, **dadurch gekennzeichnet, dass** mittels des Bildaufnahmegeräts (30) gleichzeitig ein Bild der Körperflüssigkeit in einem ersten Röhrchen und ein Bild eines nachfolgenden zweiten Röhrchens zur Bestimmung von Typ und Größe des zweiten Röhrchens hergestellt werden.

6. Verfahren nach einem der vorhergehenden Ansprüche, **dadurch gekennzeichnet, dass** ein Farbbild der Körperflüssigkeit und des Röhrchens hergestellt wird.

7. Verfahren nach Anspruch 6, **dadurch gekennzeichnet, dass** das Farbbild der Körperflüssigkeit und/oder des Röhrchens automatisch in ein Grauwertbild umgerechnet wird.

8. Verfahren nach einem der Ansprüche 6 oder 7, **dadurch gekennzeichnet, dass** zur Erkennung von Typ und Größe des Röhrchens mehrere senkrechte Linien in das Bild des Röhrchens gelegt, die Farbwerte bzw. Helligkeitswerte der auf diesen Linien liegenden Bildpunkte erfasst, Farbwert- bzw. Helligkeitswertveränderungen ermittelt und mit Daten bekannter Röhrchen vergtichen werden.

9. Verfahren nach einem der vorhergehenden Ansprüche, **dadurch gekennzeichnet, dass** ein oder mehrere Ausschnittbilder hergestellt werden, die mittels der Bildverarbeitungssoftware zu einem Gesamtbild zusammengesetzt werden.

10. Verfahren nach einem der vorhergehenden Ansprüche, **dadurch gekennzeichnet, dass** zur Auswertung des Bildes der Körperflüssigkeit mehrere senkrechte und/oder waagrechte Linien in das Bild der Körperflüssigkeit gelegt, die Farbwert- bzw. Helligkeitswerte der auf diesen Linien liegenden Bildpunkte erfasst, Farbwert- bzw. Helligkeitswertveränderungen ermittelt und Hintergrundbereich und/oder Oberkante (55) der Körperflüssigkeit ermittelt werden.

11. Verfahren nach Anspruch 10, **dadurch gekennzeichnet, dass** der Hintergrundbereich rechnerisch aus dem Bild entfernt wird.

12. Verfahren nach einem der vorhergehenden Ansprüche, **dadurch gekennzeichnet, dass** zur Identifizierung des Trennmittels (25) und/oder des Blutkuchens (26) in einer zentrifugierten Probe von Körperflüssigkeit jede Bildpunktzeile des Bildes von unten nach oben abgetastet wird und der Übergang von dunklen Farb- oder Helligkeitswerten zu helleren Farb- oder Helligkeitswerten detektiert und als Phasengrenze zwischen Blutkuchen (26) und einem Trennmittel (25) bzw. zwischen Trennmittel (25) und Serum (21) definiert wird.

13. Verfahren nach Anspruch 12, **dadurch gekennzeichnet, dass** der ermittelte Bildbereich für das Trennmittel (25) und/oder den Blutkuchen (26) rechnerisch aus dem Bild entfernt wird.

14. Verfahren nach einem der vorhergehenden Ansprüche, **dadurch gekennzeichnet, dass** zur Detektion von Feststoffteilchen im Serum bzw. Plasma (21) die dem Serum (21) entsprechende Region mit gespeicherten Farbwerten von Vergleichsproben verglichen und als "klar" oder "nicht klar" klassifiziert wird.

15. Verfahren nach einem der Ansprüche 1 bis 13, **dadurch gekennzeichnet, dass** zur Identifizierung von Feststoffteilchen im Serum bzw. Plasma (21) die mit dem Serum (21) entsprechende Region mit gespeicherten Farbwerten definierter Feststoffteilchen in Vergleichsproben verglichen wird und nach Formen oder Farben, bzw. "rote Clots" und "weiße Clots" klassifiziert wird.

16. Verfahren nach einem der Ansprüche 12 bis 15, **dadurch gekennzeichnet, dass** der Blutkuchen und/oder das Trennmittel rechnerisch aus dem Bild entfernt werden.

17. Verfahren nach einem der vorhergehenden Ansprüche, **dadurch gekennzeichnet, dass** zur Bestimmung des Volumens des Blutserums (21) Ober- und Untergrenze des Serumbereichs automatisch ermittelt werden und anhand des Durchmessers des Röhrchens (20) das Volumen automatisch errechnet wird.

18. Verfahren nach einem der vorhergehenden Ansprüche, **dadurch gekennzeichnet, dass** zur Farbanalyse des Serums für jeden Bildpunkt der Farbwert festgestellt, mit gespeicherten Farbwerten von klassifizierten Vergleichsproben verglichen und als "gut" oder "nicht gut" klassifiziert wird.

19. Verfahren nach Anspruch 18, **dadurch gekennzeichnet, dass** der Vergleich in einem Farbraum, vorzugsweise in einem "CIE-Lab"-Raum vorgenommen wird.

20. Verfahren nach Anspruch 18 oder 19, **dadurch gekennzeichnet, dass** das Serum insgesamt als "gut" klassifiziert wird, wenn die Mehrzahl der Bildpunkte als "gut" klassifiziert wird, und dass das Serum insgesamt als "nicht gut" klassifiziert wird, wenn die Mehrzahl der Bildpunkte als "nicht gut" klassifiziert wird.

21. Verfahren nach einem der vorhergehenden Ansprüche, **dadurch gekennzeichnet, dass** anhand der ermittelten Klassifizierung des Serums die Handhabungsvorrichtung gesteuert wird, so dass "gute" und/oder "klare" Proben zur weiteren Analyse gegeben und "nicht gute" und/oder "nicht klare" Proben aussortiert werden.

22. Verfahren nach einem der vorhergehenden Ansprüche, **dadurch gekennzeichnet, dass** zur Erstellung von Vergleichsdaten Bilder bekannter Proben hergestellt, in Klassen klassifiziert und in Dateilen abgespeichert werden.

23. Verfahren nach Anspruch 22, **dadurch gekennzeichnet, dass** mindestens einmal für alle Bilder der einzelnen Klassen Farbmerkmale extrahiert werden.

24. Computer, programmtechnisch eingerichtet zur Durchführung des Verfahrens nach einem der Ansprüche 1 bis 23.

25. Vorrichtung zur Analyse von Körperflüssigkeiten mit einem Bildaufnahmegerät (30), das mit einer elektronischen Bildauswertevorrichtung verbunden ist und mindestens einen Computer nach Anspruch 24 enthält.

26. Digitales Speichermedium mit elektronisch auslesbaren Steuersignalen, die so mit einem programmierten Computersystem zusammen wirken können, dass ein Verfahren nach einem der Ansprüche 1 bis 23 ausgeführt wird.

27. Speichermedium nach Anspruch 26 mit einer Steuerungssoftware zur Steuerung einer Vorrichtung nach Anspruch 25.

28. Speichermedium nach Anspruch 27 mit einer Bildverarbeitungssoftware zur Analyse von Bildern.

29. Computerprogrammprodukt zur Durchführung des Verfahrens nach einem der Ansprüche 1 bis 23 nach Implementierung in einen Computer.

30. Computerprogrammprodukt nach Anspruch 29, mit einer Steuerungssoftware zur Steuerung einer Vorrichtung nach Anspruch 25.

31. Computerprogrammprodukt nach Anspruch 29, mit einer Bildverarbeitungssoftware zur Analyse von Bildern.

32. Computerprogrammprodukt nach einem der Ansprüche 29 bis 31, gespeichert auf einem Datenträger, insbesondere einer Festplatte, einer Floppy Disk, einer CD-ROM oder einem Speicherband.

## Claims

1. Method for analyzing body fluids, wherein
- an image recording device (30) is used to produce at least one image of the body fluid (21) located in a tube (20) that is analyzed by means of image processing software,
- an image of the tube (20) is produced with the aid of the image recording device (30), and the image of the tube (20) is compared with the aid of evaluation software with stored image files and/or dimensions of known tubes,
- firstly, the type and size of the tube (20) being determined automatically, by comparing image data of the caps of the tubes (20) holding the body fluid with data of known caps, and thereby determining the type of tube and height of tube,
- after determination of the type and size of the tube (20) the latter being moved automatically with the aid of the determined data for the tube in such a way that as complete an image as possible of the body fluid can be produced by means of the image recording device (30), and
- in order to identify blood serum/plasma (21) and/or separating means (25) and/or blood clot (26) by means of the region-grow method, regions of pixels of the image of the body fluid with similar color values are determined, and the resulting regions are defined as serum (21), separating means (25) and/or blood clot (26).

2. Method according to Claim 1, **characterized in that** a scanner and/or image evaluation software are provided for detecting an inscription placed on the tube (20), a label and/or a cover (27), and **in that** the scanner detects the bar code and the image evaluation software detects the edges of the cover (27), and the tube (20) is moved automatically such that the cover (27) is situated on the side of the tube (20) averted from the image recording device (30).

3. Method according to Claim 2, **characterized in that** following the optical blanking out of a cover (27) the tube (20) is covered on the side averted from the image recording device (30).

4. Method according to Claim 3, **characterized in that** 15 to 50%, preferably 20 to 25%, of the outer surface of the tube is covered.

5. Method according to one of the preceding claims, **characterized in that** the image recording device (30) is used to produce simultaneously an image of the body fluid in a first tube and an image of a subsequent second tube for the purpose of determining the type and size of the second tube.

6. Method according to one of the preceding claims, **characterized in that** a colour image of the body fluid and of the tube is produced.

7. Method according to Claim 6, **characterized in that** the colour image of the body fluid and/or of the tube are/is converted automatically into a grey value image.

8. Method according to one of Claims 6 or 7, **characterized in that** for the purpose of detecting the type and size of the tube, a number of vertical lines are laid in the image of the tube, the colour values and/or brightness values of the pixels lying on these lines are detected, and changes in colour value and/or brightness value are determined and compared with the data of known tubes.

9. Method according to one of the preceding claims, **characterized in that** one or more detail images are produced that are combined by means of the image processing software to form an overall image.

10. Method according to one of the preceding claims, **characterized in that** for the purpose of evaluating the image of the body fluid, a number of perpendicular and/or horizontal lines are laid in the image of the body fluid, the colour values and/or brightness values of the pixels lying on these lines are detected, changes in colour value and/or brightness value are determined, and the background region and/or upper edge (55) of the body fluid are determined.

11. Method according to Claim 10, **characterized in that** the background region is removed from the image computationally.

12. Method according to one of the preceding claims, **characterized in that** in order to identify the separating means (25) and/or the blood clot (26) in a centrifuged sample of body fluid, each pixel row of the image is scanned from bottom to top, and the transition from dark colour or brightness values to brighter colour or brightness values is detected and defined as phase boundary between blood clot (26) and a separating means (25) or between the separating means (25) and serum (21).

13. Method according to Claim 12, **characterized in that** the image region determined for the separating means (25) and/or the blood clot (26) is removed from the image computationally.

14. Method according to one of the preceding claims, **characterized in that** in order to detect solid particles in the serum and/or plasma (21), the region corresponding to the serum (21) is compared with stored colour values of reference samples and classified as "clear" or "not clear".

15. Method according to one of Claims 1 to 13, **characterized in that** in order to identify solid particles in the serum and/or plasma (21), the region corresponding to the serum (21) is compared with stored colour values of defined solid particles in reference samples, and classified in terms of shapes or colours, for example "red clots" and "white clots".

16. Method according to one of Claims 12 to 15, **characterized in that** the blood clot and/or the separating means are/is removed from the image computationally.

17. Method according to one of the preceding claims, **characterized in that** in order to determine the volume of the blood serum (21), upper and lower limits of the serum region are determined automatically, and the volume is calculated automatically with the aid of the diameter of the tube (20).

18. Method according to one of the preceding claims, **characterized in that** the colour value is determined for each pixel for the purpose of colour analysis of the serum, is compared with stored colour values of classified reference samples, and is classified as "good" or "not good".

19. Method according to Claim 18, **characterized in that** the comparison is undertaken in a colour space, preferably in a "CIE Lab" space.

20. Method according to Claim 18 or 19, **characterized in that** the serum is classified overall as "good" when the majority of the pixels are classified as "good", and **in that** the serum is classified overall as "not good" when the majority of the pixels are classified as "not good".

21. Method according to one of the preceding claims, **characterized in that** the handling apparatus is controlled with the aid of the classification determined for the serum such that "good" and/or "clear" samples are passed for further analysis, and "not good" and/or "not clear" samples are rejected.

22. Method according to one of the preceding claims, **characterized in that** images of known samples are produced, classified into classes and stored in data file/files in order to produce reference data.

23. Method according to Claim 22, **characterized in that** colour features are extracted at least once for all the images of the individual classes.

24. Computer programmed for carrying out the method according to one of Claims 1 to 23.

25. Apparatus for analyzing body fluids with an image recording device (30) that is connected to an electronic image evaluation apparatus and includes at least one computer according to Claim 24.

26. Digital storage medium having electronically readable control signals that can cooperate with a programmed computer system such that a method according to one of Claims 1 to 23 is executed.

27. Storage medium according to Claim 26 that has control software for controlling an apparatus according to Claim 25.

28. Storage medium according to Claim 27 that has image processing software for analyzing images.

29. Computer program product for carrying out the method according to one of Claims 1 to 23 after implementation in a computer.

30. Computer program product according to Claim 29, with a control software for controlling an apparatus according to Claim 25.

31. Computer program product according to Claim 29, with an image processing software for analyzing images.

32. Computer program product according to one of Claims 29 to 31 that is stored on a data carrier, in particular a hard disk, a floppy disk, a CD ROM or a storage tape.

## Revendications

1. Procédé d'analyse de liquides corporels, dans lequel
- au moyen d'un appareil de prise de vues (30), au moins une image du liquide corporel (21) se trouvant dans un petit tube (20) est réalisée, laquelle est analysée au moyen d'un logiciel de traitement d'image,
- au moyen de l'appareil de prise de vues (30), une image du petit tube (20) est réalisée et l'image du petit tube (20) est comparée au moyen d'un logiciel d'évaluation à des fichiers d'image enregistrés et/ou à des dimensions de petits tubes connus,
- le type et la taille du petit tube (20) étant d'abord déterminés automatiquement, en comparant des données d'image des capuchons des petits tubes (20) recevant le liquide corporel à des données de capuchons connus et en déterminant ainsi le type et la taille du petit tube,
- après la détermination du type et de la taille du petit tube (20), celui-ci étant automatiquement déplacé à l'aide des données calculées pour le petit tube de sorte qu'au moyen de l'appareil de prise de vues (30), une image la plus complète possible du liquide corporel puisse être réalisée et
- pour identifier le sérum sanguin/plasma (21) et/ou des agents de séparation (25) et/ou des caillots sanguins (26), des régions de points d'image de l'image du liquide corporel avec des valeurs de couleurs similaires sont calculées au moyen du procédé « region-grow » et les régions qui en résultent sont définies comme sérum (21), agent de séparation (25) et/ou caillot sanguin (26).

2. Procédé selon la revendication 1, **caractérisé en ce que** pour détecter une inscription placée sur le petit tube (20), une étiquette et/ou un couvercle (27), un scanner respectivement un logiciel d'évaluation d'image sont prévus, **en ce que** le scanner détecte le code-barres et le logiciel d'évaluation d'image détecte les bords du couvercle (27) et le petit tube (20) est ainsi automatiquement déplacé de sorte que le couvercle (27) repose sur le côté du petit tube (20) détourné de l'appareil de prise de vues (30).

3. Procédé selon la revendication 2, **caractérisé en ce qu'**ensuite, pour masquer optiquement un couvercle (27), le petit tube (20) est recouvert sur le côté détourné de l'appareil de prise de vues (30).

4. Procédé selon la revendication 3, **caractérisé en ce que** 15 à 50%, de préférence 20 à 25% de la surface extérieure du petit tube est recouverte.

5. Procédé selon l'une des revendications précédentes, **caractérisé en ce qu'**au moyen de l'appareil de prise de vues (30), une image du liquide corporel dans un premier petit tube et une image d'un deuxième petit tube suivant sont réalisées simultanément pour déterminer le type et la taille du deuxième petit tube.

6. Procédé selon l'une des revendications précédentes, **caractérisé en ce qu'**une image couleur du liquide corporel et du petit tube est réalisée.

7. Procédé selon la revendication 6, **caractérisé en ce que** l'image couleur du liquide corporel et/ou du petit tube est convertie automatiquement en une image de niveau de gris.

8. Procédé selon la revendication 6 ou 7, **caractérisé en ce que** pour identifier le type et la taille du petit tube, une pluralité de lignes verticales est placée dans l'image du petit tube, les valeurs de couleur respectivement de clarté des points d'image reposant sur ces lignes sont détectées, des modifications de valeur de couleur respectivement de clarté sont calculées et comparées à des données de petits tubes connus.

9. Procédé selon l'une des revendications précédentes, **caractérisé en ce qu'**une ou une pluralité d'image(s) d'extrait est/sont réalisée(s), lesquelles sont assemblées en une image générale au moyen du logiciel de traitement d'image.

10. Procédé selon l'une des revendications précédentes, **caractérisé en ce que** pour évaluer l'image du liquide corporel, une pluralité de lignes verticales et/ou horizontales est placée dans l'image du liquide corporel, les valeurs de couleur respectivement de clarté des points d'image reposant sur ces lignes sont détectées, des modifications de valeur de couleur respectivement de clarté sont calculées et une zone de fond et/ou une arête supérieure (55) du liquide corporel est/sont calculée(s).

11. Procédé selon la revendication 10, **caractérisé en ce que** la zone de fond est enlevée de l'image par calcul.

12. Procédé selon l'une des revendications précédentes, **caractérisé en ce que** pour identifier l'agent de séparation (25) et/ou le caillot sanguin (26) dans un échantillon centrifugé de liquide corporel, chaque ligne de point d'image de l'image est balayée de bas en haut et le passage de valeurs de couleur ou de clarté sombres à des valeurs de couleur ou de clarté plus claires est détecté et est défini comme limite de phase entre des caillots sanguins (26) et un agent de séparation (25) respectivement entre agent de séparation (25) et sérum (21).

13. Procédé selon la revendication 12, **caractérisé en ce que** la zone d'image calculée pour l'agent de séparation (25) et/ou le caillot sanguin (26) est enlevée de l'image par calcul.

14. Procédé selon l'une des revendications précédentes, **caractérisé en ce que** pour détecter des fragments de corps solides dans le sérum respectivement le plasma (21), la région correspondant au sérum (21) est comparée à des valeurs de couleur enregistrées d'échantillons de comparaison et classée comme « claire » ou « non claire ».

15. Procédé selon l'une des revendications 1 à 13, **caractérisé en ce que** pour identifier des fragments de corps solides dans le sérum respectivement le plasma (21), la région correspondant au sérum (21) est comparée à des valeurs de couleur enregistrées de fragments de corps solides définis dans des échantillons de comparaison et classée selon les formes ou les couleurs comme « caillot rouge » ou « caillot blanc ».

16. Procédé selon l'une des revendications 12 à 15, **caractérisé en ce que** le caillot sanguin et/ou l'agent de séparation sont enlevés de l'image par calcul.

17. Procédé selon l'une des revendications précédentes, **caractérisé en ce que** pour déterminer le volume de sérum sanguin (21), des limites supérieure et inférieure de la zone sérique sont calculées automatiquement et le volume est calculé automatiquement à l'aide du diamètre du petit tube (20).

18. Procédé selon l'une des revendications précédentes, **caractérisé en ce que** pour l'analyse couleur du sérum la valeur de couleur est déterminée pour chaque point d'image, comparée à des valeurs de couleur enregistrées d'échantillons de comparaison classés et classée comme « bonne » ou « pas bonne ».

19. Procédé selon la revendication 18, **caractérisé en ce que** la comparaison est entreprise dans un espace de couleur, de préférence dans un espace « CIE-Lab ».

20. Procédé selon la revendication 18 ou 19, **caractérisé en ce que** le sérum est classé généralement comme « bon » lorsque la pluralité de points d'image est classée comme « bonne » et que le sérum est généralement classé comme « pas bon » lorsque la pluralité de points d'image est classée comme « pas bonne ».

21. Procédé selon l'une des revendications précédentes, **caractérisé en ce qu'**à l'aide de la classification calculée du sérum, le dispositif de manipulation est commandé de façon à ce que les échantillons « bons » et/ou « clairs » soient fournis pour une analyse ultérieure et que les échantillons « pas bons » et/ou « pas clairs » soient écartés.

22. Procédé selon l'une des revendications précédentes, **caractérisé en ce que** pour réaliser des données de comparaison, des images d'échantillons connus sont réalisées, classées en classes et enregistrées dans un/des fichier(s).

23. Procédé selon la revendication 22, **caractérisé en ce que** des caractéristiques de couleur sont extraites au moins une fois pour toutes les images des différentes classes.

24. Ordinateur, équipé d'un programme pour exécuter le procédé selon l'une des revendications 1 à 23.

25. Dispositif d'analyse de liquides corporels avec un appareil de prise de vues (30) relié à un dispositif d'évaluation d'image et qui contient au moins un ordinateur selon la revendication 24.

26. Support d'enregistrement numérique avec signaux de commande pouvant être lus électroniquement qui peuvent coopérer avec un système informatique programmé de sorte qu'un procédé selon l'une des revendications 1 à 23 soit exécuté.

27. Support d'enregistrement selon la revendication 26 comprenant un logiciel de commande pour commander un dispositif selon la revendication 25.

28. Support d'enregistrement selon la revendication 27 comprenant un logiciel de traitement d'image pour analyser des images.

29. Produit de programme informatique pour exécuter le procédé selon l'une des revendications 1 à 23 après implémentation dans un ordinateur.

30. Produit de programme informatique selon la revendication 29 comprenant un logiciel de commande pour commander un dispositif selon la revendication 25.

31. Produit de programme informatique selon la revendication 29 comprenant un logiciel de traitement d'image pour analyser des images.

32. Produit de programme informatique selon l'une des revendications 29 à 31, enregistré sur un support de données, en particulier un disque dur, une disquette, un CD-ROM ou une bande enregistreuse.
